# EUROPEAN PATENT APPLICATION

(11) **EP 1 901 588 A2**
(43) Date of publication of application: **19.03.2008**
(21) Application number: 07017277.0
(22) Date of filing: 04.09.2007
(51) Int. Cl.: H05B 41/282

(54) **Liquid crystal display having driving circuit for light emitting device**

(30) Priority: 12.09.2006 KR 20060088243
(71) Applicant: Samsung Electronics Co., Ltd., Suwon-si, Gyeonggi-Do 442-742 (KR)
(72) Inventor: Lee, Yun-Gun, Chungcheonnam-do (KR); Jang, Jin-Won, Chungcheongnam-do (KR); Shimura, Tatsuhisa, Tokyo 106-8532 (JP); Sengoku, Osamu, Tokyo 106-8532 (JP)
(74) Representative: Schmidt, Sven Hendrik

(57) **Abstract**

A backlight module that uniformly maintains the brightness of a light emitting device, in which the number of transformers is reduced, and that is applicable for use with large cold cathode ray tubes includes cold cathode ray tubes arranged in parallel, transformers having first secondary-side terminals connected to first electrodes of the cold cathode ray tubes and whose primary side terminals are connected in series to constitute a closed loop, a first inverter circuit that applies a first sine wave voltage to second terminals on the secondary sides of the transformers, and a second inverter circuit that applies a second sine wave voltage having opposite phase to second electrodes of the cold cathode ray tubes.

## Description

### CROSS-REFERENCE TO RELATED APPLICATION

This application relies for priority upon Korean Patent Application No. 2006-88243 filed on September 12, 2006, the contents of which are herein incorporated by reference in its entirety.

### BACKGROUND OF THE INVENTION

### Field of the Invention

The present invention relates to a liquid crystal display (LCD) and, more particularly, to a display having a backlight module including a cold cathode ray tube and a driving circuit therefor.

### Description of the Related Art

An example of a backlight system is disclosed in FIG. 6 of US published patent application 2005/0093471 in which a plurality of cold cathode ray tubes are arranged in parallel to each other a terminal at each end of each cold cathode ray tube being connected to a respective primary coil of a balance transformer; the secondary coils of which are serially connected in respective independent closed loops. The transformers correct differences in impedance among the cold cathode ray tubes due to imbalance of the cold cathode ray tubes, a difference in physical arrangement between the cold cathode ray tubes, or the temperature slope of the cold cathode ray tubes. Because respective balance transformers must be provided for each terminal of the cold cathode ray tubes it is difficult to reduce the number of transformers.

An example in which balance transformers are provided only on a first side of a cold cathode ray tube, is disclosed in FIG. 1 of the above-mentioned published patent application. However, since the cold cathode ray tube is driven only at the first side, the backlight system is not suitable for a large-size cold cathode ray tube that requires a high driving voltage.

### SUMMARY OF THE INVENTION

According to one aspect of the present invention, a backlight module that uniformly maintains the brightness of a light emitting device, reduces the number of transformers, and is applicable for use with large cold cathode ray tube includes a plurality of first cold cathode ray tubes arranged in parallel to each other, a plurality of first transformers each having first terminals on the secondary side connected to one electrode of a respective group of cold cathode ray tubes, the primary side terminals of the transformers being connected to form a closed loop. A first inverter circuit applies a first sine wave voltage to second terminals on the secondary sides of the plurality of first transformers, and a second inverter circuit applies a second sine wave voltage having opposite phase to second electrodes of the first cold cathode ray tubes.

The backlight module further includes a plurality of second cold cathode ray tubes arranged in parallel to the first cold cathode ray tubes, a plurality of second transformers whose first terminals on the secondary sides are connected to first electrodes corresponding to the plurality of second cold cathode ray tubes, respectively, and whose first and second terminals on the primary sides are connected to each other to constitute one closed loop together with the closed loop formed by the plurality of first transformers, a third inverter circuit that applies a third sine wave voltage having a phase opposite to the phase of the first sine wave voltage to second terminals on the secondary sides of the second transformers, and a fourth inverter circuit that applies a fourth sine wave voltage having a phase opposite to the phase of the third sine wave voltage applied by the third inverter circuit to second electrodes of the second cold cathode ray tubes.

The first cold cathode ray tubes and the second cold cathode ray tubes are alternately arranged.

The backlight module further includes a first controller that detects an output current of the first inverter circuit and that compares the output current with a reference current to control the output current of the first inverter circuit.

The backlight module further includes a second controller that detects an output current of the second inverter circuit and compares the output current with the reference current to control the output current of the second inverter circuit.

The backlight module further includes a first controller that detects the output current of the first inverter circuit and the output current of the second inverter circuit and compares the output currents with the reference current to control the output currents of the first inverter circuit and the second inverter circuit and a second controller that detects an output current of the third inverter circuit and an output current of the fourth inverter circuit and compares the output currents with the reference current to control the output currents of the third inverter circuit and the fourth inverter circuit.

A driving circuit of a light emitting device includes a plurality of first light emitting devices arranged in parallel, a plurality of first transformers whose first terminals on secondary sides are connected to first electrodes corresponding to the plurality of first light emitting devices, respectively, and whose first and second terminals on primary sides are connected to each other to constitute a closed loop, a first inverter circuit that applies a first sine wave voltage to second terminals on the secondary sides of the plurality of first transformers, and a second inverter circuit that applies a second sine wave voltage having a phase opposite to a phase of a first sine wave voltage applied by the first inverter circuit to second electrodes of the first light emitting devices.

The driving circuit further includes a plurality of second light emitting devices arranged in parallel to the first light emitting devices, a plurality of second transformers whose first terminals on secondary sides are connected to first electrodes corresponding to the plurality of the second light emitting devices, respectively, and whose first and second terminals on the primary sides are connected to each other to constitute one closed loop together with the closed loop formed by the plurality of first transformers, a third inverter circuit that applies a third sine wave voltage having a phase opposite to the phase of the first sine wave voltage to second terminals on the secondary sides of the second transformers, and a fourth inverter circuit that applies a fourth sine wave voltage having a phase opposite to the phase of the third sine wave voltage applied by the third inverter circuit to second electrodes of the second light emitting devices.

The driving circuit further includes a first controller that detects, an output current of the first inverter circuit and that compares the output current with a reference current to control the output current of the first inverter circuit.

The driving circuit further includes a second controller that detects an output current of the second inverter circuit and compares the output current with the reference current to control the output current of the second inverter circuit.

The driving circuit further includes a first controller that detects the output current of the first inverter circuit and the output current of the second inverter circuit and compares the output currents with the reference current to control the output currents of the first inverter circuit and the second inverter circuit and a second controller that detects an output current of the third inverter circuit and an output current of the fourth inverter circuit and compares the output currents with the reference current to control the output currents of the third inverter circuit and the fourth inverter circuit.

A liquid crystal display (LCD) includes a liquid crystal panel having a plurality of pixels, a plurality of first cold cathode ray tubes arranged in parallel on a rear surface of the liquid crystal panel, a plurality of first transformers whose first terminals on secondary sides are connected to first electrodes corresponding to the plurality of first cold cathode ray tubes, respectively, and whose first and second terminals on primary sides are connected to each other to constitute a closed loop, a first inverter circuit that applies a first sine wave voltage to second terminals on the secondary sides of the plurality of first transformers and a second inverter circuit that applies a second sine wave voltage having a phase opposite to a phase of the first sine wave voltage applied by the first inverter circuit to second electrodes of the first cold cathode ray tubes.

The LCD further includes a plurality of second cold cathode ray tubes arranged in parallel to the first cold cathode ray tubes on the rear surface of the liquid crystal panel, a plurality of second transformers whose first terminals on the secondary sides are connected to first electrodes corresponding to the plurality of second cold cathode ray tubes, respectively, and whose first and second terminals on the primary sides are connected to each other to constitute one closed loop together with the closed loop formed by the plurality of first transformers, a third inverter circuit that applies a third sine wave voltage having a phase opposite to the phase of the first sine wave voltage to second terminals on the secondary sides of the second transformers, and a fourth inverter circuit that applies a fourth sine wave voltage having a phase opposite to the phase of the third sine wave voltage applied by the third inverter circuit to second electrodes of the second cold cathode ray tubes.

In the LCD, the first cold cathode ray tubes and the second cold cathode ray tubes are alternately arranged.

The LCD further includes a first controller that detects an output current of the first inverter circuit and that compares the output current with a reference current to control the output current of the first inverter circuit.

The LCD further includes a second controller that detects an output current of the second inverter circuit and compares the output current with the reference current to control the output current of the second inverter circuit.

The LCD further includes a first controller that detects the output current of the first inverter circuit and the output current of the second inverter circuit and compares the output currents with the reference current to control the output currents of the first inverter circuit and the second inverter circuit and a second controller that detects an output current of the third inverter circuit and an output current of the fourth inverter circuit and compares the output currents with the reference current to control the output currents of the third inverter circuit and the fourth inverter circuit.

### BRIEF DESCRIPTION OF THE DRAWINGS

The above and other advantages of the present invention will become readily apparent with reference to the following detailed description when considered in conjunction with the accompanying drawings, in which:

FIG. 1 is an exploded perspective view illustrating a liquid crystal display (LCD) according to a first embodiment of the present invention;

FIG. 2 is a block diagram illustrating the structure of a circuit of the LCD according to the first embodiment of the present invention;

FIG. 3 is a sectional view illustrating a cold cathode ray tube according to the first embodiment of the present invention;

FIG. 4 is a circuit diagram illustrating the LCD according to the first embodiment of the present invention;

FIG. 5 is a block diagram illustrating an inverter circuit according to the first embodiment of the present invention; and

FIG. 6 is a circuit diagram illustrating an LCD according to a second embodiment of the present invention.

### DESCRIPTION OF THE EMBODIMENTS

### First Embodiment

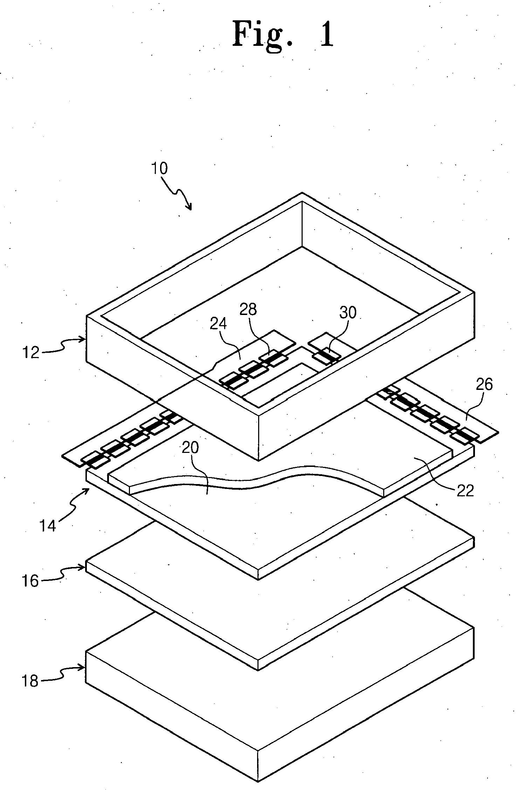

FIG. 1 is an exploded perspective view illustrating a liquid crystal display (LCD) 10 according to a first embodiment of the present invention. The LCD 10 includes a liquid crystal panel 14, a diffusion plate 16, and a backlight assembly 18 inserted into a top chassis 12. The liquid crystal panel 14 includes a thin film transistor (TFT) liquid crystal panel 20, color filers 22 provided on the TFT liquid crystal panel 20, driving modules 24 and 26 that control the driving of the TFT liquid crystal panel 20, and connectors 28 and 30 that electrically connect the driving modules 24 and 26 and the TFT liquid crystal panel 20 to each other.

The backlight assembly 18 generates light that is uniformly guided to the TFT liquid crystal panel 20 by the diffusion plate 16. Light is radiated onto the rear surface of the TFT liquid crystal panel 20 and the light that passes through the TFT liquid crystal panel 20 is uniformly output through the color filters 22. The driving modules 24 and 26 control the driving of the TFT liquid crystal panel 20.

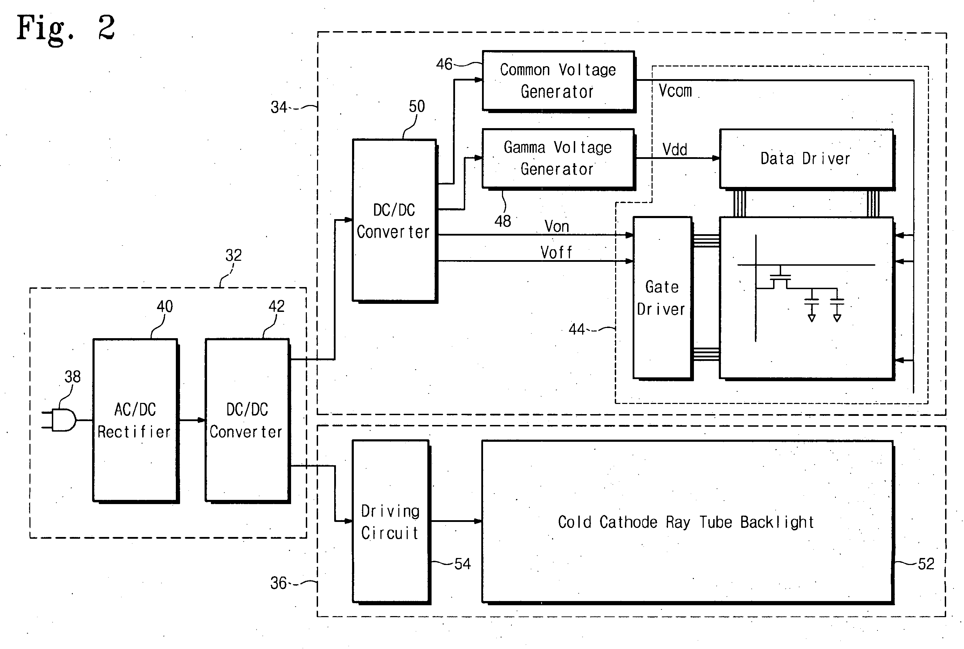

FIG. 2 is a block diagram illustrating the structure of the circuit of the backlight assembly 18. The circuit includes a power source circuit 32, a liquid crystal panel driving circuit 34, and a backlight driving circuit 36 as a backlight module.

The power source circuit 32 includes an alternate current (AC)/direct current (DC) rectifier 40 connected to an AC plug 38 to which AC power of 100V is supplied and a DC/DC converter 42 that converts the output voltage of the AC/DC rectifier 40 to supply a predetermined voltage to the liquid crystal panel driving circuit 34 and the backlight driving circuit 36.

The liquid crystal panel driving circuit 34 includes a gate line/data line driving circuit 44 that drives the gate line or the data line of the TFT liquid crystal panel 14, a common voltage (Vcom) generator 46 and a gamma (γ) voltage generator 48 that supply various voltages to the data line, and a DC/DC converter 50 that supplies a DC power source to the gate line/data line driving circuit 44, the Vcom generator 46, and the γ voltage generator 48.

The backlight driving circuit 36 includes a cold cathode ray tube backlight 52 that includes a cold cathode ray tube backlight array and a driving circuit 54 that supplies a radio frequency voltage having amplitude of about 2kV to the cold cathode ray tube backlight 52.

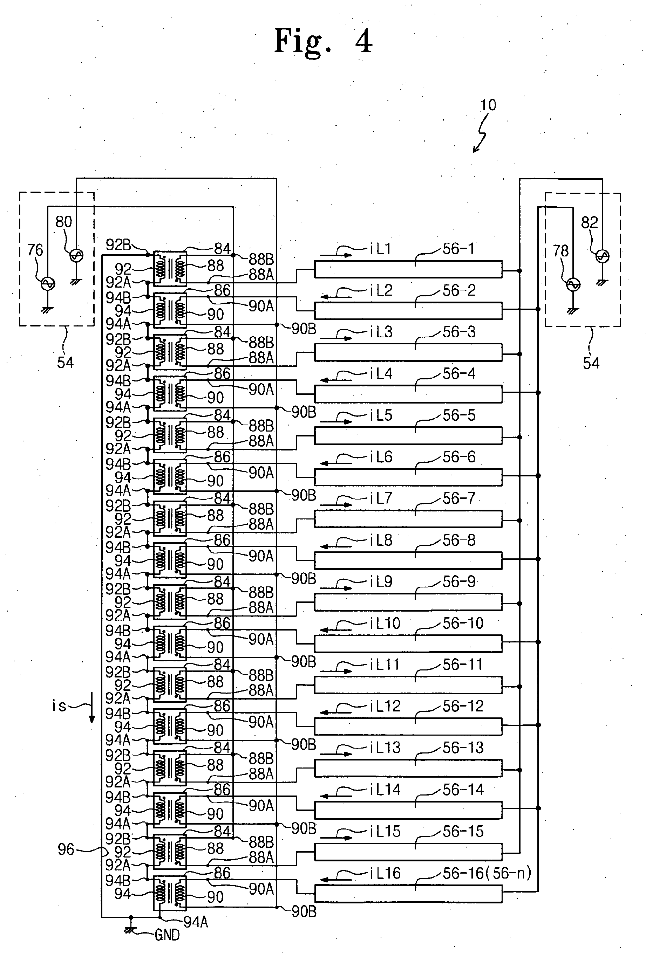

The cold cathode ray tube backlight 52, which is a light emitting device, includes a plurality of cold cathode ray tubes 56-1, 56-2, ..., 56-(n-1), and 56-n that are illustrated in FIG. 4. The cold cathode ray tubes 56-1, 56-2, ..., 56-(n-1), and 56-n are arranged in parallel to each other. Hereinafter, the n cold cathode ray tubes 56-1, 56-2, ..., 56-(n-1), and 56-n will be referred to as a cold cathode ray tube 56. According to the present embodiment, n=16 and the 16 cold cathode ray tubes 56 are provided in the cold cathode ray tube backlight 52.

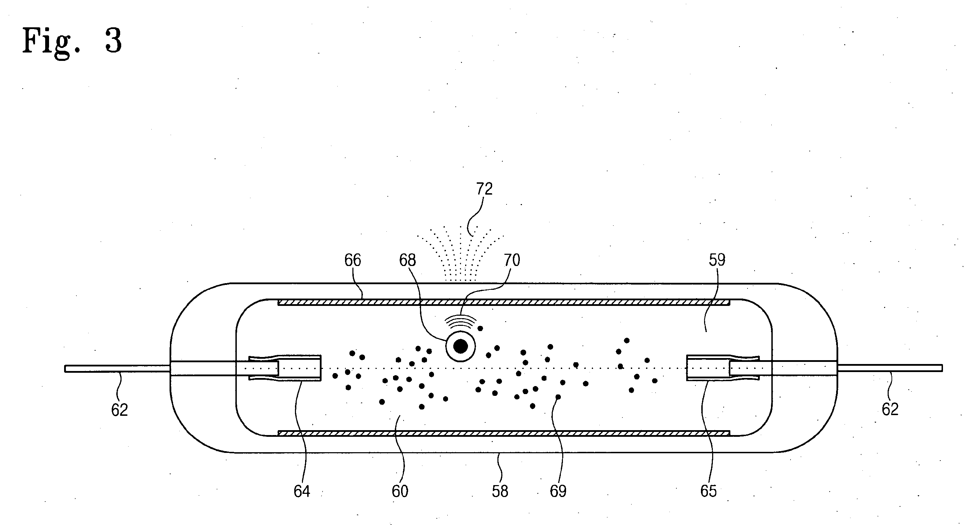

FIG. 3 is a sectional view illustrating the structure of the cold cathode ray tube 56.

The cold cathode ray tube 56 includes a glass pipe 58 the inner space 59 of which is filled with a 60. Lead lines 62 are mounted on both ends of the glass pipe 58 and the leading ends of the lead lines 62 are drawn to the inner space 59 of the glass pipe 58. An electrode 64 as a first electrode is mounted in the leading end of a first lead line 62 and an electrode 65 as a second electrode is mounted in the leading end of a second lead line 62. The inner surface of the glass pipe 58 is coated with a fluorescent member 66.

When mercury 68 is sealed in the glass pipe 58 and a radio frequency of high voltage is applied to both electrodes 64 and 65, electrons 69 pass through the inner space 59 of the glass pipe 58. While the electrons 69 are passing through the inner space 59 of the glass pipe 58, an ultraviolet (UV) ray 70 is output from the excited mercury 68 and the UV ray 70 is radiated onto the fluorescent member 66 so that white light 72 is output from the fluorescent member 66 to the outside of the glass pipe 58.

As illustrated in FIG. 4, the driving circuit 54 is connected to the cold cathode ray tubes 56. The driving circuit 54 includes an anode inverter circuit 76 as a first inverter circuit, an anode inverter circuit 78 as a fourth inverter circuit, a cathode inverter circuit 80 as a third inverter circuit, a cathode inverter circuit 82 as a second inverter circuit, an exemplary plurality of 8 (according to the present embodiment) balance transformers 84 as first (group of) transformers, and an illustrative plurality of 8 (according to the present embodiment) balance transformers 86 as second (group of) transformers.

The output terminal of the anode inverter circuit 76 is connected to second terminal 88B of secondary coil 88 of each of the balance transformers 84. The anode inverter circuit 76 applies a sine wave signal (a first sine wave voltage) of a high voltage to the second terminals 88B of the secondary coils 88 of the balance transformers 84. One balance transformer 84 is provided in correspondence with one cold cathode ray tube 56. First terminals 88A of the secondary coils 88 of the balance transformers 84 are connected to the electrodes 64 of the first ends of the odd cold cathode ray tubes 56-1, 56-3, ..., and 56-(n-1) while interposing the lead lines 62 therebetween.

The output terminal of the cathode inverter circuit 82 is connected to the electrodes 65 of the second ends of the odd cold cathode ray tubes 56-1, 56-3, ..., and 56-(n-1) connected to the balance transformers 84 while interposing the lead lines 62 therebetween. The cathode inverter circuit 82 applies a high voltage sine wave signal (a second sine wave signal) having a phase opposite to the phase of the sine wave signal output from the above-described anode inverter circuit 76 to the electrodes 65 of the second ends of the odd cold cathode ray tubes 56-1, 56-3, ..., and 56-(n-1).

In addition, the output terminal of the cathode inverter circuit 80 is connected to second terminals 90B of secondary coils 90 of each of the balance transformers 86 and the cathode inverter circuit 80 applies a high voltage sine wave signal (a third sine wave voltage) to the second terminals 90B of the secondary coils 90 of the balance transformers 86. The one balance transformer 86 is provided to correspond to the one cold cathode ray tube 56. First terminals 90A of the secondary coils 90 of the balance transformers 86 are connected to the electrodes 64 of the first ends of the even cold cathode ray tubes 56-2, 56-4, ..., and 56-n while interposing the lead lines 62 therebetween.

The output terminal of the anode inverter circuit 78 is connected to the electrodes 65 of the second ends of the even cold cathode ray tubes 56-2, 56-4, ..., and 56-n connected to the balance transformers 86 while interposing the lead lines 62 therebetween. The anode inverter circuit 78 applies a high voltage sine wave signal (a fourth sine wave signal) having a phase opposite to the phase of the sine wave signal output from the above-described cathode inverter circuit 80 to the electrodes 65 of the second ends of the even cold cathode ray tubes 56-2, 56-4, ..., and 56-n.

Since the cold cathode ray tubes 56 are driven by a high voltage, great electrostatic noise is output from the cold cathode ray tubes 56. Since the electrostatic noise affects the characteristic of the LCD 10, the odd cold cathode ray tubes 56-1, 56-3, ..., and 56-(n-1) and the even cold cathode ray tubes 56-2, 56-4, ..., and 56-n are preferably driven by output voltages having different phases of 180 degrees to offset the electrostatic noise output from the cold cathode ray tubes 56. According to the first embodiment of the present invention illustrated in FIG. 4, since the odd cold cathode ray tubes 56-1, 56-3, ..., and 56-(n-1) and the even cold cathode ray tubes 56-2, 56-4, ..., and 56-n are alternately arranged to be driven by voltages having different phases of 180 degrees, the electrostatic noise output from the cold cathode ray tubes 56 is offset by the adjacent, cold cathode ray tubes 56 so that the influence of the electrostatic noise exerted upon the characteristic of the LCD 10 is reduced.

In addition, first terminals 92A and second terminals 92B of primary coils 92 provided in the balance transformers 84 and first terminals 94A and second terminals 94B of primary coils 94 provided in the balance transformers 86 are alternately connected to each other in series to form a closed loop 96. In FIG. 4, connection parts between the second terminals 92B of the primary coils 92, which are provided at the uppermost ends of the primary coils 92, and the first terminals 94A of the primary coils 94, which are provided at the lowermost ends of the first primary coils 94, are connected to a ground GND.

As described above, since the primary sides (the primary coils 92 and 94) of the balance transformers 84 and the balance transformers 86 constitute the closed loop 96, a current 'is' applied to the closed loop 96 commonly flows through the primary sides (the primary coils 92 and 94) of the balance transformers 84 and 86 and currents iLl , iL2, ..., and iLn that flow through the cold cathode ray tubes 56-1, 56-2, ..., 56-n connected to the secondary sides (the secondary coils 88 and 90) of the balance transformers 84 and 86 are maintained in a balanced state.

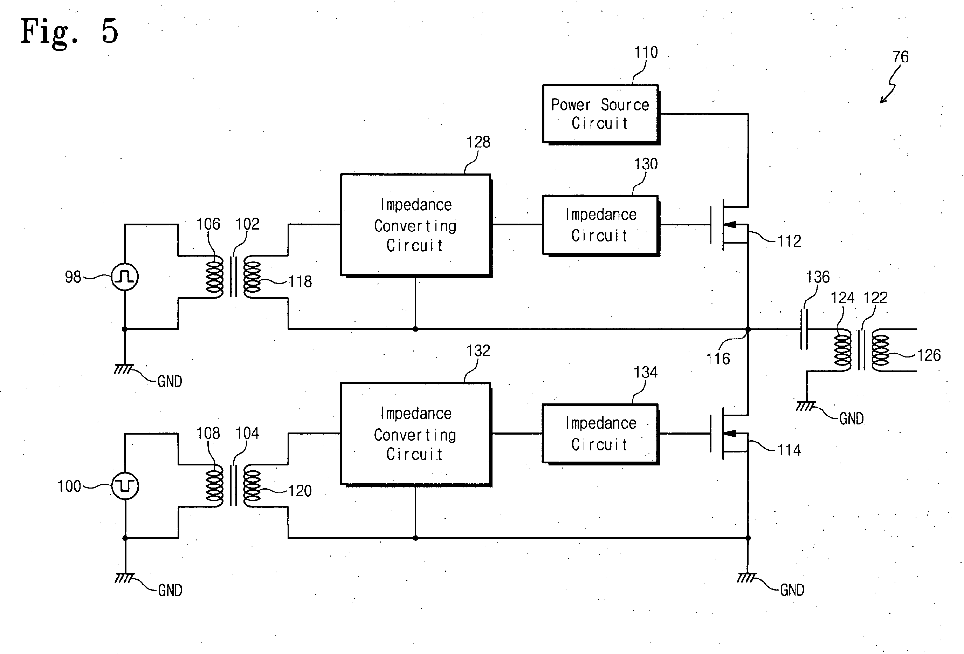

FIG. 5 is a block diagram illustrating the anode inverter circuit 76. The anode inverter circuit 78 and the cathode inverter circuits 80 and 82 have the structure the same as that of the anode inverter circuit 76, so detailed description thereof will be omitted.

The anode inverter circuit 76 includes control signal generating circuits 98. and 100 that supply control signals of square pulses. The control signal generating circuits 98 and 100 output complementary square waves that do not overlap each other, respectively. The amplitude of the square waves is about 12V. The outputs of the control signal generating circuits 98 and 100 are connected to a primary coil 106 of a drive transformer 102 and a primary coil 108 of a drive transformer 104, respectively.

In addition, the anode inverter circuit 76 includes a power source circuit 110 that generates a DC voltage of about 380V. An N channel type high voltage side field effect transistor (FET) 112 and an N channel type low voltage side FET 114 are serially connected to each other between the power source circuit 110 and the ground GND. The center point between the N channel type high voltage side FET 112 and the N channel type low voltage side FET 114 is a driving terminal 116. The gate of the high voltage side FET 112 is driven by a secondary side (a secondary coil 118) of the drive transformer 102 and the gate of the low voltage side FET 114 is driven by a secondary side (a secondary coil 120) of the drive transformer 104. The driving terminal 116 that is the center point between the high voltage side FET 112 and the low voltage side FET 114 is connected to a primary coil 124 of an inverter transformer 122.

A secondary coil 126 of the inverter transformer 122, as described above, is connected to the balance transformers 84 illustrated in FIG. 4 (the balance transformers 86 in the cathode inverter circuit 80, the cold cathode ray tubes 56-1, 56-3, ..., and 56-(n-1) in the cathode inverter circuit 82, and the cold cathode ray tubes 56-2, 56-4, ..., and 56-n in the anode inverter circuit 78). An impedance converting circuit 1 28 and an impedance circuit 130 are serially connected between the drive transformer 102 and the gate of the high voltage side FET 112. In addition, an impedance converting circuit 132 and an impedance circuit 134 are serially connected between the drive transformer 104 and the low voltage side FET 114.

Further, a capacitor 136 that transmits only the AC components of a current and a voltage is connected between the driving terminal 116 and the primary coil 124 of the inverter transformer 122.

In the anode inverter circuit 76, the path of a DC current that flows from the driving terminal 116 to the gate of the high voltage side FET 112 does not exist between the gate of the high voltage side FET 112 and the driving terminal 116, and a gate voltage of the high voltage side FET 112 becomes a negative voltage as compared with the driving terminal 116 within one cycle of a square clock signal generated from the control signal generating circuit 98. As a result, the gate of the high voltage side FET 112 is biased to a negative voltage as compared with a case where a clamp circuit exists and a margin for a change of a gate voltage generated when the low voltage side FET 114 is turned on may increase.

The impedance circuit 130 is provided in the anode inverter circuit 76 in order to shut off the influence of parasitic capacitance of the drive transformer 102 and in order to secure a margin to solve a problem derived from a penetration current. However, since the impedance circuit 130 may exert bad influence when driving the high voltage side FET 112 by supplying a high level voltage to the gate of the high voltage side FET 112 (that is, a waveform is distorted due to an RC delay so that driving the high voltage side FET 112 at a high speed is difficult), the impedance converting circuit 128 is provided. The impedance converting circuit 128 is connected between the secondary coil 118 of the drive transformer 102 and the impedance circuit 130 to reduce the impedance of the impedance circuit 130 that is seen from the drive transformer 102.

The influence of parasitic capacitance in inverter transformer 122 is reduced due to the presence of the impedance circuit 130. On the other hand, since the impedance converting circuit 128 exists, the impedance does not exert a bad influence when driving the high voltage side FET 112. In such a structure, a clamp circuit is not necessary, and no DC current flows from the driving terminal 116 to the gate of the high voltage side FET 112 Thus, the gate of the high voltage side FET 112 is biased to a negative voltage as compared with a circuit where the clamp circuit exists, and the margin is increased for the gate voltage from the low voltage side FET 114.

In addition, an impedance converting circuit 132 and an impedance circuit 134 are provided in the low voltage side FET 114, and the low voltage side FET 114 is balanced with the high voltage side FET 112.

As described above, according to the present embodiment, a power source voltage that is an output of the power source circuit 110 is stabilized so that the capacity of the power source circuit 110 can be reduced and the small and stable anode inverter circuit 76 (the anode inverter circuit. 78, the cathode inverter circuits 80 and 82 as well as the anode inverter 76) can be obtained. The anode inverter circuit 76 (the anode inverter circuit 78, the cathode inverter circuits 80 and 82 as well as the anode inverter circuit 76) according to the present embodiment is suitable for a backlight of an LCD, a liquid crystal monitor, or a liquid crystal TV. In the LCD 10, the balance transformers 84 and 86 that maintain the balance of voltages applied to the plurality of cold cathode ray tubes 56 are arranged only on the first sides (the sides where the anode inverter circuit 76 and the cathode inverter circuit 80 are provided) of the cold cathode ray tubes 56. Therefore, currents of one side of the cold cathode ray tubes 56 are maintained to be the same, so that currents of the other sides of the cold cathode ray tubes 56 can be maintained in order to be substantially the same. As described above, in the LCD 10, imbalance of currents that is caused by a difference between load conditions of inverter outputs (a difference between load of the one sides of the plurality of cold cathode ray tubes 56 that is seen from the anode inverter circuit 76 and the cathode inverter circuit 80 and load of the other sides of the plurality of cold cathode ray tubes' 56 that is seen from the anode inverter circuit 78 and the cathode inverter circuit 82) is removed, so that brightness can be uniformly maintained among the plurality of cold cathode ray tubes 56.

In the LCD 10, as described above, since the balance transformers 84 and 86 are arranged only on the one sides of the cold cathode ray tubes 56, the number of balance transformers 84 and 86 can be reduced as compared with a structure where the balance transformers are arranged on both sides of the cold cathode ray tubes 56.

Furthermore, in the LCD 10, since the closed loop 96 that consists of the primary coils. 92 of the balance transformers 84 and the primary coils 94 of the balance transformers 86 is formed on the one sides of the cold cathode ray tubes 56, wiring lines or connectors are simplified to mount electronic elements.

Since the driving circuit 54 applies opposite-phased sine wave voltages on the left and right sides of the cold cathode ray tubes 56 shown in FIG. 4, voltages having twice amplitude are applied to the cold cathode ray tubes 56, so that the driving circuit 54 is applied to the large cold cathode ray tubes 56. In particular, the driving circuit is suitable for an LCD having a large screen.

### Second Embodiment

The LCD 10 according to the second embodiment of the present invention controls currents output from the anode inverter circuits 76 and 78 and the cathode inverter circuits 80 and 82 are controlled on the basis of the currents output from the anode inverter circuits 76 and 78 and the cathode inverter circuits 80 and 82. This controlling method is different from that of the above-described LCD 10 according to the first embodiment of the present invention. Hereinafter, for convenience sake, the same reference numerals in the LCD 10 according to the second embodiment of the present invention as the reference numerals in the LCD 10 according to the first embodiment of the present invention represent the elements having the same structures, operations, and effects and description of these elements will be omitted.

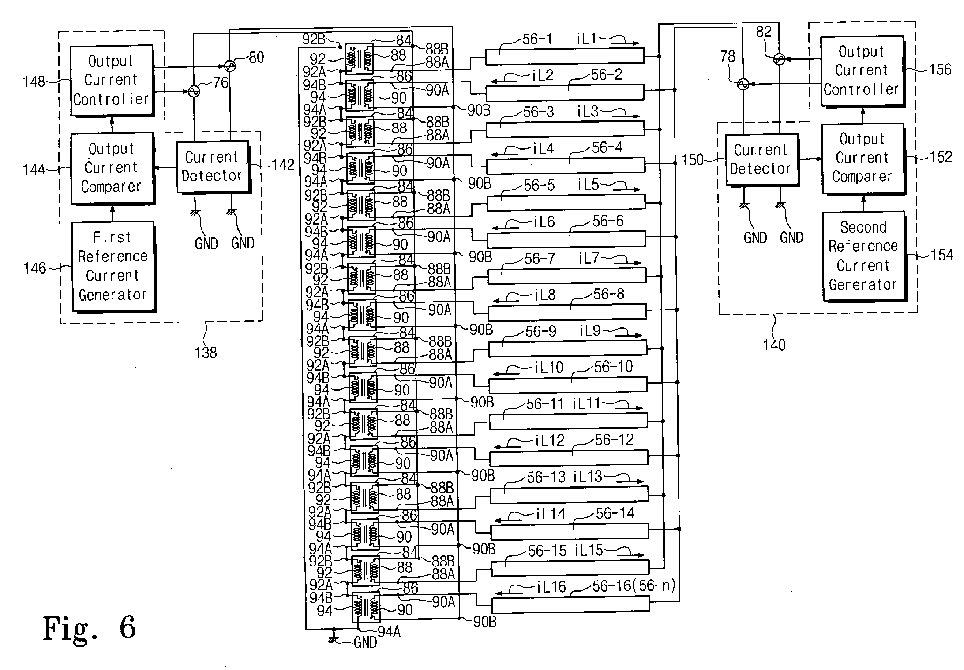

As illustrated in FIG. 6, the LCD 10 includes a first controller 138 and a second controller 140 that control currents applied to the cold cathode ray tubes 56.

The first controller 1 38 includes a current detector 142, an output current comparator 144, a first reference current generator 146, and an output current controller 148.

The current detector 142 is provided between the anode inverter circuit 76 , the cathode inverter circuit 80, and grounds GND. The current detector 142 detects currents of high voltage sine wave signals output from the anode inverter circuit 76 and the cathode inverter circuit 80 to output a detection result.

The first reference current generator 146 generates a first reference current to output the first reference current to the output current comparator 144.

The output current comparator 144 is connected to the current detector 142. The output current comparator 144 compares the first reference current output from the first reference current generator 146 with the detection result (the output currents of the anode inverter circuit 76 and the cathode inverter circuit 80) output from the current detector 142 to output a comparison result.

The output current comparator 144 is connected to the output current controller 148. The output current controller 148 controls the anode inverter circuit 76 and the cathode inverter circuit 80 on the basis of the comparison result output from the output current comparator 144 while allowing the currents output from the anode inverter circuit 76 and the cathode inverter circuit 80 to be proper.

As described above, the first controller 138 detects the output current of the anode inverter circuit 76 and the output current of the cathode inverter circuit 80 and compares the output currents with the first reference current to feedback and control the output currents of the anode inverter circuit 76 and the cathode inverter circuit 80.

On the other hand, the second controller 140 includes a current detector 150, an output current comparator 152, a second reference current generator 1 54, and an output current controller 156.

The current detector 1 50 is provided between the anode inverter circuit 78, the cathode inverter circuit 82 and grounds GND to detect currents of high voltage sine wave signals output from the anode inverter circuit 78 and the cathode inverter circuit 82 to output a detection result.

The second reference current generator 154 generates a second reference current to output the second reference current to the output current comparator 152.

The output current comparator 152 is connected to the current detector 150. The output current comparator 152 compares the second reference current output from the second reference current generator 1 54 with the detection result (the output currents of the anode inverter circuit 78 and the cathode inverter circuit 82) output from the current detector 150 to output a comparison result.

The output current comparator 152 is connected to the output current controller 156. The output current controller 156 controls the anode inverter circuit 78 and the cathode inverter circuit 82 on the basis of the comparison result output from the output current comparator 1 52 while allowing the currents output from the anode inverter circuit 78 and the cathode inverter circuit 82 to be proper.

As described above, the second controller 140 detects the output current of the anode inverter circuit 78 and the output current of the cathode inverter circuit 82 and compares the output currents with the second reference current to feedback and control the output currents of the anode inverter circuit 78 and the cathode inverter circuit 82.

Here, in the LCD 10, the balance transformers 84 and 86 are provided between the cold cathode ray tubes 56, the anode inverter circuit 76 and the cathode inverter circuit 80 (in FIG. 6, on the left side of the cold cathode ray tubes 56) so that the load capacitance of the cold cathode ray tubes 56 that is seen from the anode inverter circuit 76 and the cathode inverter circuit 80 (in FIG. 6, on the left side of the cold cathode ray tubes 56) is different from the load capacitance of the cold cathode ray tubes 56 that is seen from the anode inverter circuit 78 and the cathode inverter circuit 82 (in FIG. 6, on the right side of the cold cathode ray tubes 56). Therefore, in the LCD 10, it is difficult to control the currents output from the anode inverter circuit 76 and the cathode inverter circuit 80 to the cold cathode ray tubes 56 and the currents output from the anode inverter circuit 78 and the cathode inverter circuit 82 to the cold cathode ray tubes 56 on the basis of one reference current to maintain the brightness of the cold cathode ray tubes 56 uniformly.

According to the second embodiment of the present invention, since the LCD 10 independently corrects the currents output from the anode inverter circuit 76 and the cathode inverter circuit 80 to the cold cathode ray tubes 56 and the currents output from the anode inverter circuit 78 and the cathode inverter circuit 82 to the cold cathode ray tubes 56 using two reference currents, the brightness of the cold cathode ray tubes 56 can be uniformly maintained.

In addition, according to the second embodiment of the present invention, at the moment when the output currents of the anode inverter circuit 76 and the cathode inverter circuit 80 are controlled by the output current controller 148 of the first controller 1 38, the output currents of the anode inverter circuit 78 and the cathode inverter circuit 82 are controlled by the output current controller 1 56 of the second controller 140. However, the present invention is not limited to the above. According to the present invention, a first output voltage controller is provided in the first controller 138 instead of the output current controller 148 and a second output voltage controller is provided in the second controller 140 instead of the output current controller 156 so that output voltages of the anode inverter circuit 76 and the cathode inverter circuit 80 and output voltages of the anode inverter circuit 78 and the cathode inverter circuit 82 are controlled.

According to the present invention, the first transformers that maintain the balance of the voltages applied to the plurality of first cold cathode ray tubes are arranged only on the side of the first inverter circuit of the cold cathode ray tubes. Therefore, a current of the first inverter circuit of the cold cathode ray tubes is uniformly maintained, so that a current of the opposite side to the first inverter circuit of the cold cathode ray tubes can be uniformly maintained. As described above, according to the present invention, imbalance of currents that is caused by a difference between load conditions of inverter outputs (a difference between load of the plurality of cold cathode ray tubes that is seen from the first inverter circuit and load of the plurality of cold cathode ray tubes that is seen from the second inverter circuit) is removed so that brightness can be uniformly maintained among the plurality of cold cathode ray tubes.

In addition, according to the present invention, as described above, since the first transformers are arranged only on the side of the first inverter circuit of the cold cathode ray tubes, the number of first transformers can be reduced as compared with a structure where the first transformers are arranged on both sides of the first inverter circuit of the cold cathode ray tubes.

Since a first sine wave voltage output from the first inverter circuit that is applied to the second terminals of the secondary sides of the plurality of first transformers has a phase opposite to the phase of a second sine wave voltage applied by the second inverter circuit, voltages of large amplitudes are applied to both terminals of the cold cathode ray tubes. As a result, the present invention can be applied to the large cold cathode ray tubes.

## Claims

1. A backlight module comprising:
a plurality of first cold cathode ray tubes arranged in parallel to each other;
a plurality of first transformers whose first terminals on secondary sides are connected to first electrodes corresponding to the first cold cathode ray tubes, respectively, and whose first and second terminals on primary sides are connected to each other to form a closed loop;
a first inverter circuit that applies a first sine wave voltage to second terminals on the secondary sides of the first transformers; and
a second inverter circuit that applies a second sine wave voltage having a phase opposite to a phase of the first sine wave voltage applied by the first inverter circuit to second electrodes of the first cold cathode ray tubes.

2. The backlight module of claim 1, further comprising:
a plurality of second cold cathode ray tubes arranged in parallel to the first cold cathode ray tubes;
a plurality of second transformers whose first terminals on the secondary sides are connected to first electrodes corresponding to the second cold cathode ray tubes, respectively, and whose first and second terminals on the primary sides are connected to each other to form one closed loop together with the closed loop formed by the first transformers;
a third inverter circuit that applies a third sine wave voltage having a phase opposite to the phase of the first sine wave voltage to second terminals on the secondary sides of the second transformers; and
a fourth inverter circuit that applies a fourth sine wave voltage having a phase opposite to the phase of the third sine wave voltage applied by the third inverter circuit to second electrodes of the second cold cathode ray tubes.

3. The backlight module of claim 2, wherein the first cold cathode ray tubes and the second cold cathode ray tubes are alternately arranged.

4. The backlight module of claim 1, further comprising a first controller that detects an output current of the first inverter circuit and compares the output current with a reference current to control the output current of the first inverter circuit.

5. The backlight module of claim 4, further comprising a second controller that detects an output current of the second inverter circuit and compares the output current with the reference current to control the output current of the second inverter circuit.

6. The backlight module of claim 2, further comprising:
a first controller that detects the output current of the first inverter circuit and the output current of the second inverter circuit and compares the output currents with the reference current to control the output currents of the first inverter circuit and the second inverter circuit; and
a second controller that detects an output current of the third inverter circuit and an output current of the fourth inverter circuit and compares the output currents with the reference current to control the output currents of the third inverter circuit and the fourth inverter circuit.

7. A driving circuit of a light emitting device, the driving circuit comprising:
a plurality of first light emitting devices arranged in parallel to each other;
a plurality of first transformers whose first terminals on secondary sides are connected to first electrodes corresponding to the first light emitting devices, respectively, and whose first and second terminals on primary sides are connected to each other to form a closed loop;
a first inverter circuit that applies a first sine wave voltage to second terminals on the secondary sides of the first transformers; and
a second inverter circuit that applies a second sine wave voltage having a phase opposite to a phase of a first sine wave voltage applied by the first inverter circuit to second electrodes of the first light emitting devices.

8. The driving circuit of claim 7, further comprising:
a plurality of second light emitting devices arranged in parallel to the first light emitting devices;
a plurality of second transformers whose first terminals on the secondary sides are connected to first electrodes corresponding to the second light emitting devices, respectively, and whose first and second terminals on the primary sides are connected to each other to form one closed loop together with the closed loop formed by the first transformers;
a third inverter circuit that applies a third sine wave voltage having a phase opposite to the phase of the first sine wave voltage to second terminals on the secondary sides of the second transformers; and
a fourth inverter circuit that applies a fourth sine wave voltage having a phase opposite to the phase of the third sine wave voltage applied by the third inverter circuit to second electrodes of the second light emitting devices.

9. The driving circuit of claim 7, further comprising a first controller that detects an output current of the first inverter circuit and compares the output current with a reference current to control the output current of the first inverter circuit.

10. The driving circuit of claim 9, further comprising a second controller that detects an output current of the second inverter circuit and compares the output current with the reference current to control the output current of the second inverter circuit.

11. The driving circuit of claim 8, further comprising:
a first controller that detects the output current of the first inverter circuit and the output current of the second inverter circuit and compares the output currents with the reference current to control the output currents of the first inverter circuit and the second inverter circuit; and
a second controller that detects an output current of the third inverter circuit and an output current of the fourth inverter circuit and compares the output currents with the reference current to control the output currents of the third inverter circuit and the fourth inverter circuit.

12. A liquid crystal display (LCD) comprising:
a liquid crystal panel having a plurality of pixels;
a plurality of first cold cathode ray tubes arranged in parallel to each other on a rear surface of the liquid crystal panel;
a plurality of first transformers whose first terminals on secondary sides are connected to first electrodes corresponding to the first cold cathode ray tubes, respectively, and whose first and second terminals on primary sides are connected to each other to form a closed loop;
a first inverter circuit that applies a first sine wave voltage to second terminals on the secondary sides of the first transformers; and
a second inverter circuit that applies a second sine wave voltage having a phase opposite to a phase of the first sine wave voltage applied by the first inverter circuit to second electrodes of the first cold cathode ray tubes.

13. The LCD of claim 12, further comprising:
a plurality of second cold cathode ray tubes arranged in parallel to the first cold cathode ray tubes on the rear surface of the liquid crystal panel;
a plurality of second transformers whose first terminals on the secondary sides are connected to first electrodes corresponding to the second cold cathode ray tubes, respectively, and whose first and second terminals on the primary sides are connected to each other to form one closed loop together with the closed loop formed by the plurality of first transformers;
a third inverter circuit that applies a third sine wave voltage having a phase opposite to the phase of the first sine wave voltage to second terminals on the secondary sides of the second transformers; and
a fourth inverter circuit that applies a fourth sine wave voltage having a phase opposite to the phase of the third sine wave voltage applied by the third inverter circuit to second electrodes of the second cold cathode ray tubes.

14. The LCD of claim 13, wherein the first cold cathode ray tubes and the second cold cathode ray tubes are alternately arranged.

15. The LCD of claim 12, further comprising a first controller that detects an output current of the first inverter circuit and compares the output current with a reference current to control the output current of the first inverter circuit.

16. The LCD of claim 15, further comprising a second controller that detects an output current of the second inverter circuit and compares the output current with the reference current to control the output current of the second inverter circuit.

17. The LCD of claim 13, further comprising:
a first controller that detects the output current of the first inverter circuit and the output current of the second inverter circuit and compares the output currents with the reference current to control the output currents of the first inverter circuit and the second inverter circuit; and
a second controller that detects an output current of the third inverter circuit and an output current of the fourth inverter circuit and compares the output currents with the reference current to control the output currents of the third inverter circuit and the fourth inverter circuit.

18. A backlight module comprising:
a plurality of first cold cathode ray tubes;
a plurality of second cold cathode ray tubes arranged alternately with the first cold cathode ray tubes;
a plurality of first balance transformers whose first terminals on secondary sides are connected to first electrodes corresponding to the first cold cathode ray tubes, respectively;
a plurality of second balance transformers whose first terminals on the secondary sides are connected to first electrodes corresponding to the second cold cathode ray tubes, respectively;
a first inverter circuit that applies a first sine wave voltage to second terminals on the secondary sides of the first balance transformers; a second inverter circuit that applies a second sine wave voltage having a phase opposite to a phase of the first sine wave voltage to second terminals on the secondary sides of the second balance transformers;
a third inverter circuit that applies a third sine wave voltage having a phase opposite to the phase of the first sine wave voltage to second electrodes of the first cold cathode ray tubes; and
a fourth inverter circuit that applies a fourth sine wave voltage having a phase opposite to the phase of the second sine wave voltage to second electrodes of the second cold cathode ray tubes,
wherein the first and second terminals on the primary sides of the first balance transformers, and the first and second terminals on the primary sides of the second balance transformers form one closed loop.

19. The backlight module of claim 18, further comprising:
a first controller that detects the output current of the first inverter circuit and the output current of the second inverter circuit and compares the output currents with the reference current to control the output currents of the first inverter circuit and the second inverter circuit; and
a second controller that detects an output current of the third inverter circuit and an output current of the fourth inverter circuit and compares the output currents with the reference current, to control the output currents of the third inverter circuit and the fourth inverter circuit.
